# FASCICULE DE BREVET EUROPEEN

(11) **EP 2 833 610 B1**
(45) Date de publication et mention de la délivrance du brevet: **21.11.2018**
(21) Numéro de dépôt: 14178556.8
(22) Date de dépôt: 25.07.2014
(51) Int. Cl.: H04M 3/533, H04M 3/20, H04M 3/42

(54) **Système et procédé pour la prise d'un appel préalablement dirigé sur messagerie vocale**
System und Verfahren zur Anrufübernahme nach Umleitung zur Voicemail
Method and system for call pick up after diversion to voicemail

(30) Priorité: 02.08.2013 FR 1357704
(43) Date de publication de la demande: 04.02.2015
(73) Titulaire: Orange, 75015 Paris (FR)
(72) Inventeur: De Maquille, Cyril, 78000 Versailles (FR); Megnin, Sébastien, 92140 Clamart (FR); Mazeiras, Frédéric, 92100 Boulogne Billancourt (FR)

(56) Documents cités:
- EP-A2- 0 689 333
- US-A- 5 712 902

## Description

L'invention concerne une technique de mise en relation de deux entités clientes ou dispositifs terminaux.

L'invention se rapporte au domaine général des télécommunications.

Elle concerne plus particulièrement une mise en relation de deux entités clientes, suite à un appel émis par la première entité cliente à destination de la deuxième entité cliente, l'appel n'ayant pas abouti et ayant été redirigé vers une troisième entité cliente.

De façon connue, un service de messagerie vocale est associé avec la plupart des services de téléphonie sur réseau fixe et sur réseau mobile, qu'ils s'appuient sur des technologies à commutation de circuits ou de voix sur IP, pour « Internet Protocol ».

Ainsi, lorsqu'un appel émis par un terminal appelant à destination d'un terminal appelé ne peut aboutir pour quelle que raison que ce soit (terminal occupé, indisponible, non réponse, renvoi inconditionnel vers sa messagerie, terminal hors couverture, etc.), cet appel est redirigé par le réseau du terminal appelé vers une autre destination, par exemple le système de messagerie vocale du terminal appelé. L'utilisateur du terminal appelant peut alors déposer sur ce système de messagerie un message vocal à destination du terminal appelé, suite par exemple à la diffusion d'une annonce vocale d'accueil par le système de messagerie. L'appel peut également être redirigé vers un autre numéro d'appel.

Les termes appelant et appelé sont relatifs par la suite à l'appel qui a été manqué. Il arrive fréquemment que l'utilisateur du terminal appelé détecte rapidement l'appel du terminal appelant qu'il a manqué et tente de le joindre immédiatement. Lorsque l'appel a été renvoyé vers le système de messagerie, ou bien vers un autre numéro, le terminal appelé ne peut alors plus joindre le terminal appelant tant que ce dernier est en communication suite à la redirection. Le terminal appelant peut se trouver contraint de couper la communication en cours ou bien de gérer un double appel. Ces actions nécessitent une interaction de l'utilisateur du terminal appelant qui dépend de l'interface homme-machine du terminal et qui n'est pas toujours simple.

Le document EP 0 689 333 A2 de l'art antérieur décrit un procédé de mise en relation d'un utilisateur, appelé sur son pager, avec un appelant, redirigé ou non vers un numéro de redirection.

Le document US 5,712,902 A décrit un procédé de mise en relation entre une première entité cliente (terminal appelé) et une deuxième entité cliente (terminal appelant) suite à un premier appel émis par la deuxième entité cliente. Le premier appel est acheminé via un dispositif de commutation (telephone switching facility). Ce dernier détecte si la progression de ce premier appel doit être interceptée. La progression du premier appel est interceptée si ce dernier est redirigé vers une troisième entité cliente.

Un des buts de l'invention est de remédier à des insuffisances/inconvénients de l'état de la technique et/ou d'y apporter des améliorations.

Selon un premier aspect, l'invention a pour objet un procédé de mise en relation d'une première entité cliente avec une deuxième entité cliente dans un réseau de communication. La première entité cliente a souscrit à un service de mise en relation, Le procédé comprend une étape d'acheminement par l'intermédiaire d'un dispositif de mise en relation d'un premier appel émis par la deuxième entité cliente à destination de la première entité cliente et redirigé vers une troisième entité cliente et les étapes suivantes mises en oeuvre par le dispositif de mise en relation:
- insertion d'un module de liaison en coupure dudit premier appel, une première branche étant établie entre la deuxième entité cliente et le module de liaison et une deuxième branche étant établie entre le module de liaison et la troisième entité cliente ;
- détection d'un deuxième appel associé au service de mise en relation émis par la première entité cliente par l'intermédiaire du module de liaison ;
- mise en relation des première et deuxième entités clientes par connexion par le module de liaison de la première branche et dudit deuxième appel.

La deuxième entité cliente, c'est-à-dire le terminal appelant, a tenté de joindre la première entité cliente, c'est-à-dire le terminal appelé, et a été redirigée vers la troisième entité cliente. Cette troisième entité cliente peut par exemple correspondre à un système de messagerie, ou bien encore à un système de mise en attente d'appel. L'appel a été ainsi manqué par la première entité cliente. Ceci est par exemple le cas lorsque le terminal est occupé ou indisponible ou ne répond pas ou bien encore lorsqu'un renvoi inconditionnel vers le système de messagerie est configuré ou bien encore lorsque le terminal mobile ne se trouve pas dans une zone de couverture du réseau.

Ainsi, grâce au procédé de mise en relation, la première entité cliente peut entrer en relation avec la deuxième entité cliente qui avait essayé de la joindre, sans nécessiter d'actions particulières de l'utilisateur de la deuxième entité cliente sur son terminal. Ces actions particulières sont relatives à une autre communication qui est en cours suite à sa redirection vers la troisième entité cliente. Le procédé de mise en relation permet ainsi de simplifier les interactions de l'utilisateur de la deuxième entité cliente avec son terminal, s'il souhaite terminer cette autre communication en cours ou bien la mettre en attente. Lorsque l'utilisateur de la deuxième entité cliente n'a aucune action vis-à-vis de cette autre communication en cours, le procédé de mise en relation permet d'éviter à la première entité cliente d'émettre plusieurs appels à destination de la deuxième entité cliente, jusqu'à ce que cette autre communication en cours soit terminée. Le procédé de mise en relation permet ainsi d'améliorer la perception du service d'appel fourni par un opérateur de réseau aussi bien du côté du terminal appelant que de celui du terminal appelé.

Les différents modes ou caractéristiques de réalisation mentionnés ci-après peuvent être ajoutés indépendamment ou en combinaison les uns avec les autres, aux étapes du procédé de mise en relation tel que défini précédemment.

Dans un mode de réalisation particulier, le deuxième appel est émis à destination de la deuxième entité cliente et est redirigé vers le dispositif de mise en relation.

Ainsi, l'appel émis par la première entité cliente à destination de la deuxième entité cliente est redirigé vers le dispositif de mise en relation par un équipement du réseau. Généralement, un terminal affiche une information relative aux appels manqués à destination de son utilisateur. L'interaction homme-machine au niveau de la première entité cliente est ainsi simplifiée, puisqu'il lui suffit de demander un rappel de la deuxième entité cliente.

Dans un mode de réalisation particulier, le deuxième appel est émis à destination du dispositif de mise en relation.

La première entité cliente contacte directement le dispositif de mise en relation pour être mise en relation avec la deuxième entité cliente. Une touche du terminal peut être programmée pour accéder à ce service. Généralement, une touche du terminal est programmée pour interroger le système de messagerie. Ainsi, lorsque le service de mise en relation est fourni conjointement au service de messagerie, il suffit d'un appui sur une touche pour contacter le service de messagerie et être mis en relation, si cela est encore possible. De même, il est possible de programmer une touche du terminal pour joindre un numéro de mise en attente. L'interaction homme-machine au niveau de la première entité cliente est ainsi simplifiée, puisqu'il lui suffit d'appuyer sur cette touche pour déclencher un appel vers le dispositif de mise en relation.

Selon une caractéristique particulière du procédé, un contexte d'appel associé à la première entité cliente comprend au moins une information relative au module de liaison inséré en coupure dans le premier appel et le procédé comprend en outre une étape d'obtention dudit contexte d'appel suite à la détection du deuxième appel.

Grâce au contexte d'appel associé à la première entité cliente, le dispositif de mise en relation peut détecter que le premier appel a été redirigé vers la troisième entité cliente et est en cours par l'intermédiaire du module de liaison. Le dispositif de mise en relation peut ainsi mettre en relation la première entité cliente avec la deuxième entité cliente.

Selon une caractéristique particulière, le procédé comprend en outre une étape de diffusion à destination d'au moins une des première et deuxième entités clientes d'une notification relative à la mise en relation en cours.

La perception par l'entité cliente notifiée de la mise en relation est ainsi améliorée.

Selon un deuxième aspect, l'invention concerne également un système de mise en relation d'une première entité cliente avec une deuxième entité cliente dans un réseau de communication. La première entité cliente a souscrit à un service de mise en relation, Le système comprend un module d'acheminement par l'intermédiaire d'un dispositif de mise en relation d'un premier appel émis par la deuxième entité cliente à destination de la première entité cliente et redirigé vers une troisième entité cliente. Le dispositif de mise en relation comprend :
- un module de commande d'un module de liaison, agencé pour commander une insertion du module de liaison en coupure du premier appel, une première branche étant établie entre la deuxième entité cliente et le module de liaison et une deuxième branche étant établie entre le module de liaison et la troisième entité cliente ;
- un module de détection, agencé pour détecter un deuxième appel émis par la première entité cliente par l'intermédiaire du module de liaison ;
le module de commande étant en outre agencé pour commander une mise en relation des première et deuxième entités clientes par connexion par le module de liaison de la première branche et dudit deuxième appel.

Les avantages énoncés pour le procédé selon le premier aspect sont transposables directement au système et au dispositif de mise en relation.

Selon une caractéristique particulière, le système de mise en relation comprend en outre un module de liaison, agencé pour être inséré dans un appel.

Selon un troisième aspect, l'invention concerne un programme pour un dispositif de mise en relation, comprenant des instructions de code de programme destinées à commander l'exécution des étapes du procédé de mise en relation précédemment décrit mises en oeuvre par le dispositif, lorsque ce programme est exécuté par ce dispositif de mise en relation et un support d'enregistrement lisible par un dispositif de mise en relation sur lequel est enregistré un programme pour un dispositif.

Les avantages énoncés pour le procédé de mise en relation selon le premier aspect sont transposables directement au programme pour un dispositif de mise en relation et au support d'enregistrement.

L'invention sera mieux comprise à l'aide de la description suivante de modes de réalisation particuliers de la technique de mise en relation, en référence aux dessins annexés sur lesquels :
- la figure 1 représente un système de commande d'une mise en relation dans un réseau de communication ;
- la figure 2 illustre des étapes du procédé de mise en relation selon un mode particulier de l'invention;
- les figures 3a-3c illustrent un exemple de mise en oeuvre du procédé de mise en relation selon un mode particulier de réalisation de l'invention ;
- la figure 4 représente un dispositif de mise en relation selon un mode particulier de l'invention.

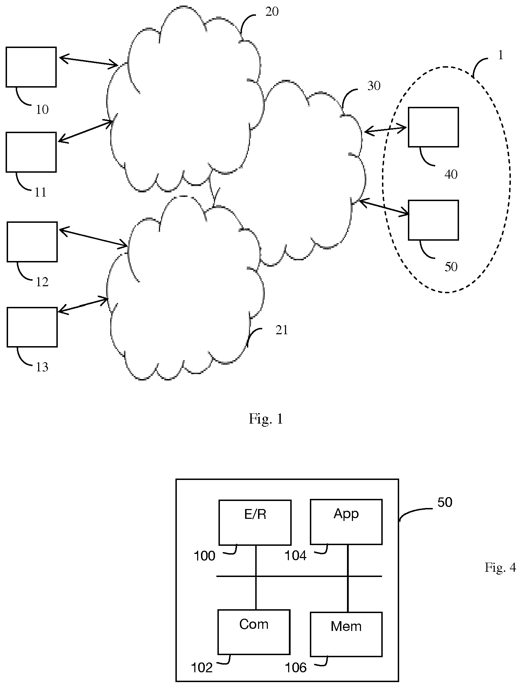

La figure 1 représente, dans son environnement, un système 1 de commande d'une mise en relation dans un réseau de communication. Les différents dispositifs représentés à la figure 1 communiquent entre eux par l'intermédiaire d'un réseau de communication 30. Plus précisément, des entités clientes 10, 11 sont connectées au réseau de communication 30 par l'intermédiaire d'un premier réseau d'accès 20. Des entités clientes 12, 13 sont connectées au réseau de communication 30 par l'intermédiaire d'un deuxième réseau d'accès 21. A titre d'exemple illustratif, le premier réseau d'accès 20 est un réseau d'accès fixe et le deuxième réseau d'accès 21 est un réseau d'accès mobile. Aucune limitation n'est attachée à la nature de ces réseaux d'accès, ni au nombre d'entités clientes qui leur sont connectées.

Dans l'exemple envisagé sur la figure 1, le système 1 de commande permet à un utilisateur d'une première entité cliente 12 d'être mis en relation avec une deuxième entité cliente 11 pour une communication vocale. On suppose ici que cette mise en relation fait suite à un appel manqué de la deuxième entité cliente 11, c'est-à-dire le terminal appelant, vers la première entité cliente 12, c'est-à-dire le terminal appelé, et à une redirection du terminal appelant 11 vers une troisième entité cliente 13 par l'intermédiaire du système de commande 1. Un appel manqué correspond par exemple à un appel auquel l'utilisateur du terminal appelé 12 n'a pas répondu, à un appel qui a été renvoyé sans condition particulière, à un appel qui n'a pu aboutir du fait d'une indisponibilité du terminal appelé (éteint, hors couverture), ...

La troisième entité cliente 13 correspond par exemple à un système de messagerie vocale associé à l'utilisateur du terminal appelé 12, auprès duquel des utilisateurs peuvent laisser des messages vocaux suite à un appel vers le terminal appelé 12 qui n'a pas abouti. A titre d'autre exemple illustratif, la troisième entité cliente 13 correspond à un dispositif de mise en attente d'appel, tel qu'un disque musical d'un standard téléphonique, ou bien encore au terminal d'un utilisateur associé (assistant(e), standardiste,...).

Dans un mode de réalisation particulier, le système de commande 1 comprend un système de messagerie vocale.

Dans un mode de réalisation particulier, les communications sont de type vidéo et le système de messagerie est un système de messagerie vidéo.

Aucune limitation n'est attachée à la nature des entités clientes 10-13. Ainsi, les entités clientes peuvent être des terminaux téléphoniques, des ordinateurs portables ou fixes, des tablettes, etc...

Toutefois, pour mieux illustrer la technique de mise en relation, on suppose par la suite que les entités clientes 10-13 sont des téléphones et que les communications sont des communications vocales.

Le service de téléphonie peut s'appuyer sur une technologie à commutation de circuits ou bien de voix sur IP. Aucune limitation n'est attachée à cette technologie.

On se place par la suite dans le cas où les appels entre les entités clientes sont établis au moyen du protocole d'initiation de sessions SIP, pour « Session Initiation Protocol ».

Par la suite, les utilisateurs des entités clientes sont identifiés par des numéros de téléphone leur permettant d'être joignables et d'émettre également des communications à destination d'autres entités clientes.

Bien entendu, d'autres types d'identités d'entités clientes peuvent être envisagés dans le cadre de la technique de mise en relation, en fonction notamment de la nature des terminaux et du réseau de communication, dès lors que ces identités permettent aux entités clientes de communiquer sur leurs réseaux respectifs et d'être joints par l'intermédiaire de ces réseaux. Ainsi, la technique de mise en relation s'applique également lorsque les identités sont des adresses électroniques, des adresses SIP ou IP, etc.

Le système de commande 1 comprend un module de liaison 40 et un dispositif de mise en relation 50.

Le dispositif de mise en relation 50 est agencé pour exécuter une logique du service de mise en relation, permettant de détecter des cas d'appels croisés et de commander le module de liaison 40.

Plus précisément, le dispositif de mise en relation 50 est agencé pour :
- commander une insertion du module de liaison 40 en coupure d'un appel redirigé,
- détecter qu'un appel ultérieur est associé à l'appel redirigé (appels croisés) suite à un appel manqué, et
- commander une mise en relation des émetteurs de ces appels croisés avec une continuité d'appel pour les utilisateurs.

On appelle « appels croisés » un premier appel de A vers B, manqué par B et redirigé vers C, et un deuxième appel émis par B, soit vers A, soit vers le système de messagerie vocale.

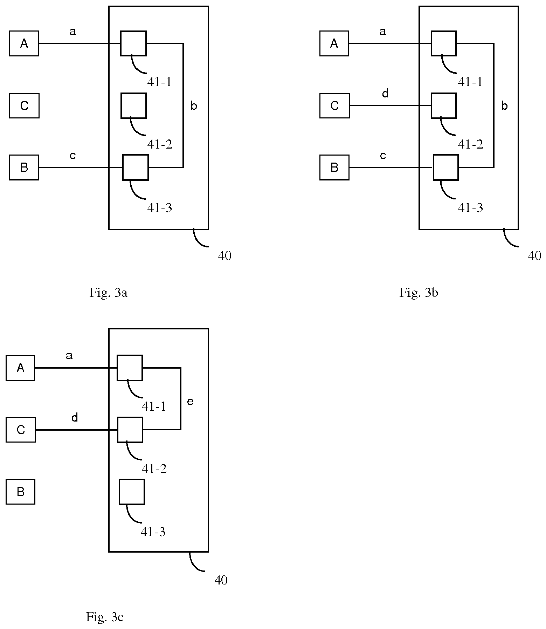

Dans un mode de réalisation particulier, le module de liaison 40 comprend au moins deux composants élémentaires 41. Tel que représenté à la figure 3a, le module de liaison 40 comprend trois composants élémentaires 41-1, 41-2, 41-3. Aucune limitation n'est attachée à ce nombre de composants élémentaires. Un composant élémentaire 41 est notamment agencé pour gérer une première branche externe d'un appel et un lien en interne du module de liaison 40 pour cet appel. La première branche est établie entre une première entité cliente et un premier composant élémentaire 41-1. Le lien interne est établi entre le premier composant élémentaire 41-1 et un deuxième composant élémentaire 41-2. Puis la deuxième branche de l'appel est établie entre le deuxième composant élémentaire 41-2 et une deuxième entité cliente. Grâce à deux de ces composants élémentaires 41-1, 41-2, le module de liaison 40 est agencé pour s'insérer en coupure d'un appel entre les deux entités clientes, un lien en interne entre ces deux composants élémentaires 41 étant établi. Ainsi, comme cela est détaillé ultérieurement en relation avec le procédé de mise en relation, lorsque deux appels doivent être mis en relation, il est uniquement nécessaire de modifier les liens internes entre les composants élémentaires 41. Ceci est mis en oeuvre sans raccrocher les appels et sans nécessiter d'actions de la part des utilisateurs.

Un système de mise en relation, non représenté sur la figure 1, comprend notamment :
- un système de commande 1 ;
- un module d'acheminement, non représenté sur la figure 1, localisé dans le réseau de communication, agencé pour acheminer par l'intermédiaire du système de commande 1 un premier appel émis par une deuxième entité cliente à destination d'une première entité cliente, ayant souscrit à un service de mise en relation, et redirigé vers une troisième entité cliente.

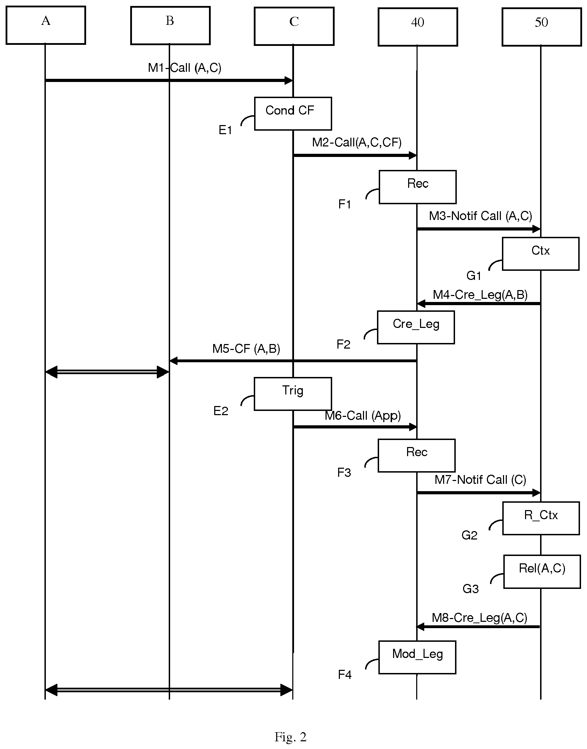

Nous allons maintenant décrire le procédé de mise en relation, tel qu'il est mis en oeuvre par le système de mise en relation, notamment par le système de commande 1 dans un mode particulier de réalisation, en relation avec la figure 2, et l'illustrer à l'aide des figures 3a-3c.

Dans ce mode de réalisation particulier, le dispositif de mise en relation 50 et le module de liaison 40 correspondent à deux dispositifs distincts. Aucune limitation n'est attachée à ce mode de réalisation particulier et le procédé de mise en relation est aisément transposable à un autre mode de réalisation dans lequel le dispositif de mise en relation 50 et le module de liaison 40 font partie d'un même dispositif.

Le dispositif de mise en relation 50 et le module de liaison 40 communiquent entre eux au moyen de services web sur http ou un protocole de communication propriétaire. Aucune limitation n'est attachée au type de protocole.

Afin de simplifier la description du procédé de mise en relation, on appelle par la suite la deuxième entité cliente 11 terminal appelant A, la troisième entité cliente 13 terminal de redirection B et la première entité cliente 12 terminal appelé C. Ces dénominations de terminaux appelant, appelé et de redirection sont données par rapport au premier appel qui est émis par la deuxième entité cliente 11.

On se place dans le cas où le terminal appelé C a activé un service supplémentaire de renvoi d'appel en cas de non réponse vers le terminal B. Le terminal appelé C a également souscrit au service de mise en relation.

Le terminal appelant A initie un appel vers le terminal appelé C, dit premier appel. Ce premier appel est représenté sur la figure 2 de manière simplifiée par une flèche M1-Call(A,C). Il est bien entendu que cette initiation d'appel peut donner lieu à des échanges de plusieurs messages protocolaires qui ne sont pas détaillés ici pour simplifier la description du procédé de mise en relation et qui sont connus de l'état de la technique. Il en est de même pour les échanges ultérieurs entre les entités clientes et les différents réseaux.

Dans une étape E1, en raison d'une absence de réponse de l'utilisateur du terminal appelé C et grâce à l'activation du service supplémentaire de renvoi d'appel, le premier appel est renvoyé vers le terminal de redirection B. Ce renvoi du premier appel est mis en oeuvre par le réseau d'accès 21 du terminal appelé C et est représenté sous la forme d'une flèche M2-Call(A,C,CF) sur la figure 2. Cet appel renvoyé est acheminé par le module d'acheminement par l'intermédiaire du système de commande 1.

Plus précisément, dans une étape F1, le module de liaison 40 détecte au moyen d'un premier composant élémentaire 41-1 que le premier appel est renvoyé et transmet un message de notification M3-Notif Call(A,C) au dispositif de mise en relation 50.

Dans une étape G1, le dispositif de mise en relation 50 crée un contexte d'appel associé au terminal appelé C. Ce contexte d'appel comprend notamment un identifiant du terminal appelant A, un identifiant du terminal de redirection C et une information relative au module de liaison 40 qui va être inséré en coupure dans ce premier appel. Toujours dans cette étape G1, le dispositif de mise en relation 50 commande une insertion dans le premier appel du module de liaison 40 par un message M4-Cre_Leg(A,C). Vu du dispositif de mise en relation 50, le premier appel comprend une première branche entre le terminal appelant A et le module de liaison 40 et une deuxième branche du module de liaison 40 vers le terminal de redirection B.

La commande d'insertion est reçue par le module de liaison 40 dans une étape F2. Plus précisément, dans le mode de réalisation décrit, le module de liaison 40 connecte par un lien interne le premier composant élémentaire 41-1 avec un deuxième composant élémentaire 41-2 et dirige le premier appel renvoyé vers sa destination, c'est-à-dire le terminal de redirection B. Cette redirection est représentée sous la forme d'une flèche M5-CF(A,B).

Le module de liaison 40 est ainsi placé en coupure de l'appel entre le terminal appelant A et le terminal de redirection B. Cette mise en coupure est illustrée par la figure 3a. Une première branche, notée a, relie le terminal appelant A au premier composant élémentaire 41-1 du module de liaison 40. Un premier lien interne, noté b, relie le premier composant élémentaire 41 avec le deuxième composant élémentaire 41-2. Une deuxième branche, notée c, relie le deuxième composant élémentaire 41-2 avec le terminal de redirection B.

Le terminal appelant A est alors en relation avec le terminal de redirection B.

On se place par la suite dans le cas où l'utilisateur du terminal appelé C détecte qu'il a manqué le premier appel émis par le terminal appelant A. On rappelle que les dénominations appelé et appelant sont données relativement au premier appel manqué. L'utilisateur du terminal appelé C déclenche alors dans une étape E2 un deuxième appel par exemple vers le terminal appelé A, représenté par une flèche M6-Call (App) sur la figure 2.

Le module de liaison 40 reçoit dans une étape F3 le deuxième appel et transmet au dispositif de mise en relation 50 un message de notification M7-Notif Call(C). Ce message de notification M7 indique notamment que le terminal appelé C est en cours d'initialisation d'un appel à destination du terminal appelant A ou bien du système de messagerie vocale.

La figure 3b illustre le module de liaison 40 à l'issue de cette étape F3. Une troisième branche, notée d, est créée entre le terminal appelé C et un troisième composant élémentaire 41-3 du module de liaison 40.

Le dispositif de mise en relation 50 reçoit ce message de notification dans une étape G2 et détecte qu'il s'agit d'un appel associé au service de mise en relation, plus précisément un appel croisé avec le premier appel pour lequel il a reçu un message de notification à l'étape G1. Dans un mode de réalisation particulier, pour détecter cet appel croisé, le dispositif de mise en relation 50 obtient le contexte d'appel associé au terminal appelé C et détermine ainsi que le premier appel est en cours entre le terminal appelant A et le terminal de redirection B.

Dans cette étape G3, le dispositif de mise en relation 50 commande au module de liaison 40 par un message M8-Cre_Leg(A,C) de mettre en relation le terminal appelé C et le terminal appelant A par connexion interne dans le module de liaison 40 et de relâcher la deuxième branche du premier appel entre le module de liaison 40 et le terminal de redirection B.

Dans une étape F4, le module de liaison 40 reçoit la commande et l'exécute. On rappelle ici que le module de liaison 40 a été inséré en coupure dans le premier appel établi entre le terminal appelant A et le terminal de redirection B. Le module de liaison 40 connecte la première branche du premier appel issue du terminal appelant A avec la troisième branche du deuxième appel issue du terminal appelé C et relâche la deuxième branche du premier appel. Ainsi, une communication vocale est établie entre le terminal appelant A et le terminal appelé C sans nécessiter d'actions complexes pour les utilisateurs des terminaux.

La figure 3c illustre la configuration du module de liaison 40 à l'issue de cette étape F4. La deuxième branche c entre le module de liaison 40 et le terminal de redirection B a été relâchée. Le premier lien interne b entre les premier 41-1 et deuxième 41-2 composants élémentaires a été relâché. Un deuxième lien interne, noté e sur la figure 3c, a été établi entre les premier 41-1 et troisième 41-3 composants élémentaires. Les terminaux appelant A et appelé C sont ainsi mis en relation au moyen de la première branche a, du deuxième lien interne e et de la troisième branche d.

D'autres modes de réalisation sont également envisageables tout en restant dans le cadre du procédé de mise en relation précédemment décrit.

Dans le mode de réalisation décrit, le terminal de redirection B, c'est-à-dire la troisième entité cliente 13, est connecté au même réseau d'accès 21 que le terminal appelé C. Aucune limitation n'est attachée au réseau d'accès auquel le terminal de redirection est connecté, celui-ci pouvant se trouver dans un autre réseau d'accès.

Dans un mode de réalisation particulier, l'utilisateur du terminal appelant B a souscrit au service de mise en relation et ses appels sont automatiquement redirigés vers le service de mise en relation au moyen de mécanismes couramment mis en oeuvre dans les réseaux de communication. A titre d'exemple illustratif pour un réseau de communication s'appuyant sur une architecture IMS, pour « IP Multimedia Subsystem », une passerelle R-IM-SSF, pour « Reverse - IMS - Service Switch Function », permet de fournir à des utilisateurs un accès à des services basés sur une architecture de Réseau Intelligent.

Dans un autre mode de réalisation particulier, le terminal appelé B peut appeler directement le service de mise en relation, la logique de service permettant de décider sa mise en relation avec le terminal appelant A ou non.

Dans un autre mode de réalisation particulier, le procédé comprend en outre une étape de diffusion à destination d'au moins une des première et deuxième entités clientes d'une notification relative à la mise en relation en cours. La notification peut être vocale ou bien sous forme de message textuel affiché à l'écran du terminal. Par exemple, lorsque le terminal appelé C se connecte au service de mise en relation, il est notifié que le terminal appelant A est en train de lui laisser un message vocal sur le système de messagerie vocale et lui propose de le mettre en relation. Suite à son acceptation, il est notifié de la mise en relation. Le terminal appelant A peut également être notifié de cette mise en relation.

Le système de commande 1 et le système de mise en relation permettent ainsi de nouveaux cas d'usages dans la gestion des appels téléphoniques, répondant à des besoins clients divers. Par exemple, Alice appelle Bob, qui ne retrouve pas tout de suite son téléphone. Alice est renvoyée vers la messagerie vocale de Bob. Bob appelle le service pour être mis en relation avec Alice qui est en train de laisser un message : ils sont automatiquement connectés ensemble et peuvent alors se parler directement. Toujours à titre d'exemple, l'appel d'Alice vers le terminal mobile de Bob est renvoyé vers un terminal fixe associé également à Bob. Bob décide de récupérer l'appel d'Alice sur son terminal mobile pour éviter de se déplacer. Bob appelle le service pour être mis en relation avec Alice qui est en phase d'attente (sonnerie) de réponse du poste fixe.

Nous allons maintenant décrire un dispositif de mise en relation 50 dans un mode particulier de réalisation en référence à la figure 4. Un tel dispositif de mise en relation 50 comprend notamment :
- un module de communication 100, agencé pour communiquer avec un module de liaison 40 ;
- un module de commande 102, agencé pour commander le module de liaison 40 ;
- un module de détection 104, agencé pour détecter un deuxième appel émis par une première entité cliente par l'intermédiaire du module de liaison, ce deuxième appel étant croisé avec un premier appel émis par une deuxième entité cliente et à destination de la première entité cliente ;
- une zone mémoire 106.

Le module de commande 102 est notamment agencé pour commander :
- une insertion du module de liaison 40 en coupure du premier appel émis par la deuxième entité cliente à destination de la première entité cliente et redirigé vers une troisième entité cliente, une première branche étant établie entre la deuxième entité cliente et le module de liaison 40 et une deuxième branche étant établie entre le module de liaison 40 et la troisième entité cliente ;
- une mise en relation des première et deuxième entités clientes par connexion par le module de liaison 40 de la première branche et du deuxième appel.

Le module de détection 104 est en outre agencé pour mettre en oeuvre la logique du service de mise en relation, tel que décrit précédemment.

Dans un mode de réalisation particulier, le module de détection 104 est en outre agencé pour créer un contexte d'appel associé au terminal appelé C dans la zone mémoire 106 et sur détection du deuxième appel, pour obtenir le contexte d'appel associé au terminal appelé C afin de déterminer que le premier appel est en cours entre le terminal appelant A et le terminal de redirection B.

Dans un mode de réalisation particulier, le dispositif de mise en relation 50 commande une pluralité de modules de liaison 40.

Dans un mode de réalisation particulier, le dispositif de mise en relation 50 comprend également un module de liaison 40.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 102, 104 sont agencés pour mettre en oeuvre le procédé précédemment décrit. Il s'agit de préférence de modules logiciels comprenant des instructions logicielles pour faire exécuter les étapes du procédé de mise en relation précédemment décrit, mises en oeuvre par un dispositif de mise en relation. L'invention concerne donc aussi :
- un programme pour un dispositif de mise en relation, comprenant des instructions de code de programme destinées à commander l'exécution des étapes du procédé de mise en relation précédemment décrit, lorsque ledit programme est exécuté par ledit dispositif de mise en relation ;
- un support d'enregistrement lisible par un dispositif de mise en relation sur lequel est enregistré le programme pour un dispositif de mise en relation.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de mise en relation d'une première entité cliente (10) avec une deuxième entité cliente (11) dans un réseau de communication, la première entité cliente ayant souscrit à un service de mise en relation, ledit procédé comprenant, lorsqu'un premier appel émis par la deuxième entité cliente à destination de la première entité cliente est redirigé vers une troisième entité cliente (12), une étape d'acheminement par l'intermédiaire d'un dispositif de mise en relation (50), et les étapes suivantes mises en oeuvre par le dispositif de mise en relation :
- insertion (G1) d'un module de liaison (40) en coupure dudit premier appel, une première branche étant établie entre la deuxième entité cliente et le module de liaison et une deuxième branche étant établie entre le module de liaison et la troisième entité cliente ;
- détection (G2) d'un deuxième appel associé au service de mise en relation émis par la première entité cliente par l'intermédiaire du module de liaison ;
- mise en relation (G3) des première et deuxième entités clientes par connexion par le module de liaison de la première branche et dudit deuxième appel.

2. Procédé de mise en relation selon la revendication 1, dans lequel le deuxième appel est émis à destination de la deuxième entité cliente et est redirigé vers le dispositif de mise en relation.

3. Procédé de mise en relation selon la revendication 1, dans lequel le deuxième appel est émis à destination du dispositif de mise en relation.

4. Procédé de mise en relation selon la revendication 1, dans lequel un contexte d'appel associé à la première entité cliente comprend au moins une information relative au module de liaison inséré en coupure dans le premier appel et ledit procédé comprend en outre une étape d'obtention dudit contexte d'appel suite à la détection du deuxième appel.

5. Procédé de mise en relation selon la revendication 1, comprenant en outre une étape de diffusion à destination d'au moins une des première et deuxième entités clientes d'une notification relative à la mise en relation en cours.

6. Système de mise en relation d'une première entité cliente avec une deuxième entité cliente dans un réseau de communication, la première entité cliente ayant souscrit à un service de mise en relation, ledit système comprenant :
- un module de liaison (40), agencé pour être inséré dans un appel;
- un module d'acheminement par l'intermédiaire d'un dispositif de mise en relation (50) d'un premier appel émis par la deuxième entité cliente à destination de la première entité cliente et redirigé vers une troisième entité cliente (12) ;
- ledit dispositif de mise en relation comprenant :
- un module (102) de commande du module de liaison (40), agencé pour commander une insertion du module de liaison en coupure du premier appel, une première branche étant établie entre la deuxième entité cliente et le module de liaison et une deuxième branche étant établie entre le module de liaison et la troisième entité cliente ;
- un module (104) de détection, agencé pour détecter un deuxième appel émis par la première entité cliente par l'intermédiaire du module de liaison ;
le module de commande étant en outre agencé pour commander une mise en relation des première et deuxième entités clientes par connexion par le module de liaison de la première branche et dudit deuxième appel.

7. Programme pour un dispositif de mise en relation, comprenant des instructions de code de programme destinées à commander l'exécution des étapes du procédé mises en oeuvre par le dispositif selon l'une des revendications 1 à 5, lorsque ledit programme est exécuté par ledit dispositif.

8. Support d'enregistrement lisible par un dispositif de mise en relation sur lequel est enregistré le programme selon la revendication 7.

## Patentansprüche

1. Verfahren zur Verknüpfung einer ersten Client-Entität (10) mit einer zweiten Client-Entität (11) in einem Kommunikationsnetz, wobei die erste Client-Entität einen Verknüpfungsdienst abonniert hat, wobei das Verfahren dann, wenn ein erster Aufruf, der von der zweiten Client-Entität zur ersten Client-Entität ausgesendet wird, zu einer dritten Client-Entität (12) umgeleitet wird, einen Schritt zur Leitweglenkung über eine Verknüpfungsvorrichtung (50) und die folgenden Schritte, die durch die Verknüpfungsvorrichtung angewendet werden, umfasst:
- Einfügen (G1) eines Verbindungsmoduls (40) zur Unterbrechung des ersten Aufrufs, wobei ein erster Zweig zwischen der zweiten Client-Entität und dem Verbindungsmodul aufgebaut wird und ein zweiter Zweig zwischen dem Verbindungsmodul und der dritten Client-Entität aufgebaut wird;
- Detektieren (G2) eines zweiten Aufrufs, der dem Verknüpfungsdienst zugeordnet ist, der von der ersten Client-Entität über das Verbindungsmodul ausgesendet wird;
- Verknüpfen (G3) der ersten und der zweiten Client-Entität durch Kopplung des ersten Zweigs und des zweiten Aufrufs durch das Verbindungsmodul.

2. Verknüpfungsverfahren nach Anspruch 1, wobei der zweite Aufruf zur zweiten Client-Entität ausgesendet wird und zur Verknüpfungsvorrichtung umgeleitet wird.

3. Verknüpfungsverfahren nach Anspruch 1, wobei der zweite Aufruf zur Verknüpfungsvorrichtung ausgesendet wird.

4. Verknüpfungsverfahren nach Anspruch 1, wobei ein Aufrufkontext, der der ersten Client-Entität zugeordnet ist, mindestens eine Information in Bezug auf das Verbindungsmodul umfasst, das zur Unterbrechung in den ersten Aufruf eingefügt wird, und das Verfahren außerdem einen Schritt zum Erhalten des Aufrufkontexts nach der Detektion des zweiten Aufrufs umfasst.

5. Verknüpfungsverfahren nach Anspruch 1, das außerdem den Schritt des Verbreitens einer Benachrichtigung in Bezug auf die ablaufende Verknüpfung zu der ersten und/oder der zweiten Client-Entität umfasst.

6. System zur Verknüpfung einer ersten Client-Entität mit einer einer zweiten Client-Entität in einem Kommunikationsnetz, wobei die erste Client-Entität einen Verknüpfungsdienst abonniert hat, wobei das System Folgendes umfasst:
- ein Verbindungsmodul (40), das dazu ausgelegt ist, in einen Aufruf eingefügt zu werden;
- ein Modul zur Leitweglenkung eines ersten Aufrufs, der durch die zweite Client-Entität zur ersten Client-Entität ausgesendet und zu einer dritten Client-Entität (12) umgeleitet wird, über eine Verknüpfungsvorrichtung (50);
- wobei die Verknüpfungsvorrichtung Folgendes umfasst:
- ein Modul (102) zur Steuerung des Verbindungsmoduls (40), das dazu ausgelegt ist, ein Einfügen des Verbindungsmoduls zur Unterbrechung des ersten Aufrufs zu steuern, wobei ein erster Zweig zwischen der zweiten Client-Entität und dem Verbindungsmodul aufgebaut wird und ein zweiter Zweig zwischen dem Verbindungsmodul und der dritten Client-Entität aufgebaut wird;
- ein Detektionsmodul (104), das dazu ausgelegt ist, einen zweiten Aufruf zu detektieren, der von der ersten Client-Entität über das Verbindungsmodul ausgesendet wird;
wobei das Steuermodul außerdem dazu ausgelegt ist, eine Verknüpfung der ersten und der zweiten Client-Entität durch Kopplung des ersten Zweigs und des zweiten Aufrufs durch das Verbindungsmodul zu steuern.

7. Programm für eine Verknüpfungsvorrichtung mit Programmcodebefehlen, die die Ausführung der Schritte des Verfahrens steuern sollen, das durch die Vorrichtung nach einem der Ansprüche 1 bis 5 angewendet wird, wenn das Programm durch die Vorrichtung ausgeführt wird.

8. Aufzeichnungsträger, der durch eine Verknüpfungsvorrichtung gelesen werden kann und auf dem das Programm nach Anspruch 7 aufgezeichnet ist.

## Claims

1. Method for connecting a first client entity (10) to a second client entity (11) in a communications network, the first client entity having subscribed to a connection service, said method comprising, when a first call made by the second client entity to the first client entity is redirected to a third client entity (12), a step of routing by means of the connecting device (50), and the following steps, performed by the connecting device:
- inserting (G1) a linking module (40) for the interception of said first call, a first branch being established between the second client entity and the linking module and a second branch being established between the linking module and the third client entity;
- detecting (G2) a second call associated with the connection service made by the first client entity via the linking module;
- connecting (G3) the first and second client entities by connecting the first branch and said second call by means of the linking module.

2. Connection method according to Claim 1, wherein the second call is made to the second client entity and is redirected to the connecting device.

3. Connection method according to Claim 1, wherein the second call is made to the connecting device.

4. Connection method according to Claim 1, wherein a call context associated with the first client entity comprises at least an item of information concerning the linking module inserted for interception into the first call, and said method further comprises a step of obtaining said call context after the detection of the second call.

5. Connection method according to Claim 1, further comprising a step of broadcasting to at least one of the first and second client entities a notification regarding the connection in progress.

6. System for controlling a connection of a first client entity to a second client entity in a communications network, the first client entity having subscribed to a connection service, said system comprising:
- a linking module (40), arranged to be inserted into a call;
- a module for routing via a connecting device (50) a first call made by the second client entity to the first client entity and redirected to a third client entity (12);
- said connecting device comprising:
- a control module (102) for controlling the linking module (40), arranged to command the insertion of the linking module for the interception of the first call, a first branch being established between the second client entity and the linking module and a second branch being established between the linking module and the third client entity;
- a detection module (104), arranged to detect a second call made by the first client entity via the linking module;
the control module also being arranged to cause the first and second client entities to be connected by connecting the first branch and said second call by means of the linking module.

7. Program for a connecting device, comprising program code instructions intended to command the execution of the steps of the method performed by the dence according to any of Claims 1 to 5, when said program is run by said device.

8. Recording medium, readable by a connecting device, on which the program according to Claim 7 is recorded.
